# EUROPEAN PATENT APPLICATION

(11) **EP 1 696 363 A2**
(43) Date of publication of application: **30.08.2006**
(21) Application number: 05258092.5
(22) Date of filing: 29.12.2005
(51) Int. Cl.: G06K 7/10

(54) **Hand-free data acquisition system**

(30) Priority: 25.02.2005 CA 2498505; 17.03.2005 US 82587
(71) Applicant: Psion Teklogix Systems Inc., Mississauga, Ontario L5N 7J9 (CA)
(72) Inventor: Page, Harry, Almonte, Ontario K0A 1A0 (CA)
(74) Representative: Richardson, Mark Jonathan

(57) **Abstract**

A wearable data acquisition system is described in which the data input devices are contained within a headpiece apparatus thereby permitting the operator to control acquisition integration of image capture and display in a hands free environment. The system includes a portable data terminal communicating with the headpiece apparatus which comprises an image acquisition device having a target pattern generator for providing visual feedback for aiming and range-finding, a microphone for receiving voice commands from a human operator to the portable data terminal, and a speaker whereby the human operator receives audio feedback from the portable data terminal. In another embodiment of the present invention, the headpiece apparatus further comprises an image display system having a scanning laser heads-up display for projecting image data into the vision field of the human operator. This image display system allows the human operator to preview an image to be captured or to recall stored image data from the memory of the portable data terminal.

## Description

### Field of the Invention

The present invention relates to data and image acquisition systems and more specifically to a portable system which is adapted to be worn by a human operator.

### Background of the Invention

Portable image readers are becoming quite common for various commercial and industrial operations today. This has led to smaller and more efficient readers for operators who have found that carrying the readers was an inconvenience. There are currently in the art, wearable laser scanners for scanning one-dimensional barcodes in similar applications. These are usually in ring or back of hand configurations for convenient hands-free operation.

Many of these systems, such as the one described in US Patent 5,793,032 which issued on August 11, 1998 to Bard et al, include separate components within the same system worn on various parts of the human operator's body. For example, an image reading device may be attached to the operator's wrist and a voice input device or audio feedback device may be contained in a headpiece

Another system, such as the one described in US Patent 5,416,310 which issued on May 16, 1995 to Little, includes a portable computer and scanner system which is incorporated into a garment such as a vest or jacket worn by a human operator. The system comprises numerous components including a portable computer, a data display, data input means, an indicia reader as well as other devices. Various components, such as the indicia reader and display, must be removed for use from pockets in the garment. This system does not provide a human operator the capability of hands-free operation at the point of use.

These systems require numerous separate pieces which make them cumbersome to operate. Therefore, there is a need for a wearable, hands-free data acquisition system in which all data input components of the system are contained in a headpiece configuration.

There is a further need for operator control of the system and feedback to the operator may be achieved through various hand-free operations, such as by voice commands, audio feedback and/or visual displays.

### Summary of the Invention

The present invention overcomes the limitations of the prior art by providing a wearable, data acquisition apparatus in which the data input components are contained within a headpiece apparatus thereby permitting the human operator to control acquisition integration of image capture and display in a hands free environment.

In accordance with one aspect of the invention, the wearable data acquisition system comprising a data terminal and a headpiece apparatus adapted to be worn by an operator. The headpiece apparatus includes an image acquisition device adapted to communicate with the data terminal, a microphone for receiving voice commands from the operator for transmission to the data terminal and a speaker for receiving signals from the data terminal and transmitting audio signals to the operator.

In accordance with a further aspect of the present invention the wearable data acquisition system comprises a portable data terminal, an image acquisition device having a target pattern generator for providing visual feedback for aiming and range-finding. The wearable data acquisition system further includes a microphone for receiving voice commands from a human operator to the portable data terminal, and a speaker whereby the human operator receives audio feedback from the portable data terminal.

In accordance with another aspect of the invention, the image acquisition device, microphone and speaker are contained in eyeglasses worn by a human operator. Further, However, the image acquisition device, microphone and speaker may be contained in a hat, helmet or any headgear configuration.

In accordance with a specific aspect of the present invention, the headpiece apparatus comprises an image display system having a scanning laser heads-up display for projecting image data into the vision field of the human operator. This image display system allows the human operator to preview an image to be captured or to recall stored image data from the memory of the portable data terminal.

In the various embodiments of the invention, upon completion of a data acquisition, the data is transferred to the portable data terminal. The data terminal may then wirelessly transmit the decoded data to a remote access point of an information system or store the data in memory until a batch process is performed at a later time.

The invention is further directed to a method of operating a wearable data acquisition system having an image acquisition device on a headpiece apparatus adapted to be worn by an operator. The method comprises positioning the headpiece apparatus before a target such that the image acquisition device views the target, adjusting the relative position between the headpiece apparatus and the target until the image acquisition device is in the optimal range of the target and triggering an image acquisition cycle by the data acquisition system when the image acquisition device is in the optimal range of the target.

In accordance with another aspect of the invention, the method includes projecting a target pattern on the target for aiming the image acquisition device and for determining when the image acquisition device is in the optimal range of the target. Alternately, the method includes projecting a target pattern on the target for aiming the image acquisition device and projecting a range-finding signal on the target for determining when the image acquisition device is in the optimal range of the target.

In accordance with a specific aspect of the invention, the image acquisition cycle may be triggered by voice command by the operator or manually triggered by the operator.

Other aspects and advantages of the invention, as well as the structure and operation of various embodiments of the invention, will become apparent to those ordinarily skilled in the art upon review of the following description of the invention in conjunction with the accompanying drawings.

### Brief Description of the Drawings

The invention will be described with reference to the accompanying drawings, wherein:
Figure 1 is a perspective view of the wearable headpiece portion in accordance with an embodiment of the present invention.
Figure 2 is a block diagram of an image reader in accordance with an embodiment of the present invention
Figure 3 is a front view of the wearable headpiece portion in accordance with an embodiment of the present invention.
Figure 4 is a side view of the wearable headpiece portion in accordance with an embodiment of the present invention.
Figure 5 is a front view of the wearable data acquisition system in accordance with an embodiment of the present invention.
Figure 6 is a block diagram of a portable data terminal in accordance with an embodiment of the present invention.
Figure 7 is a front view of the wearable headpiece portion incorporated into a hat, in accordance with an embodiment of the present invention.
Figure 8 is a front view of the wearable headpiece portion incorporated into a helmet, in accordance with an embodiment of the present invention.
Figure 9 is a front view of the wearable headpiece portion incorporated into a set of earphones, in accordance with an embodiment of the present invention.
Figure 10 is a front view of the wearable data acquisition system with an arm-mounted portable data display, in accordance with an embodiment of the present invention.
Figure 11 is a front view of the finger mounted manual switch in accordance with an embodiment of the present invention.

### Detailed Description of the Invention

For purposes of explanation, specific embodiments are set forth to provide a thorough understanding of the present invention. However, it will be understood by one skilled in the art, from reading this disclosure, that the invention may be practiced without these specific details. Moreover, well-known elements, devices, process steps and the like are not set forth in detail in order to avoid obscuring the scope of the invention described.

The present invention is a wearable, data acquisition system that permits the human operator to control acquisition integration of image capture and display in a generally hands free environment. The wearable system includes a headpiece containing the data input components including an image acquisition device, a speaker and microphone and a data terminal or handheld computer which may be worn on an operator's belt. The human operator, by looking at the target of interest, aims the image acquisition device and through voice activation, initiates an image acquisition cycle. For example, the target of interest may be a barcode symbol. The human operator receives feedback on the accuracy of aiming from an integrated laser or LED-based target pattern generator. Alternatively, the aiming and range finding may also be performed using a combination of a laser or LED pointer and an ultrasonic transducer to provide visual or audio feedback. The feedback guides the operator to position the device to within an optimal reading range. Once within range, the human operator may trigger the acquisition by pressing a switch or by issuing a voice command. The device may also include automatic acquisition capabilities whereby an image acquisition is automatically triggered when the device is within range.

Upon completion of the image acquisition the image is transferred to the data terminal or handheld computer where image detection and decoding routines determine the presence of and content of detected symbologies. The data terminal can then wirelessly transmit the decoded data to a remote access point of an information system or store the data in memory until a batch process is performed at a later time.

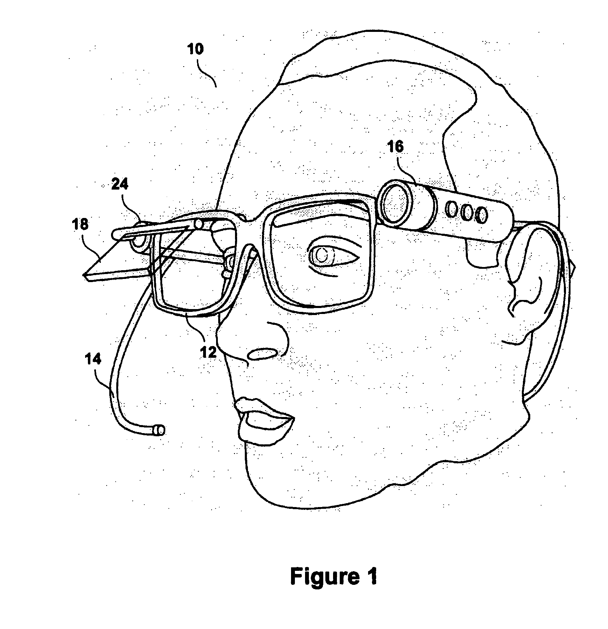

One embodiment of the headpiece **10** is illustrated in Figures 1, 3 and 4 and consists of a pair of glasses **12** that may be safety glasses into which are incorporated the data acquisition components of the data acquisition system. These include an image acquisition device **16,** a microphone **14** and a speaker **20.**

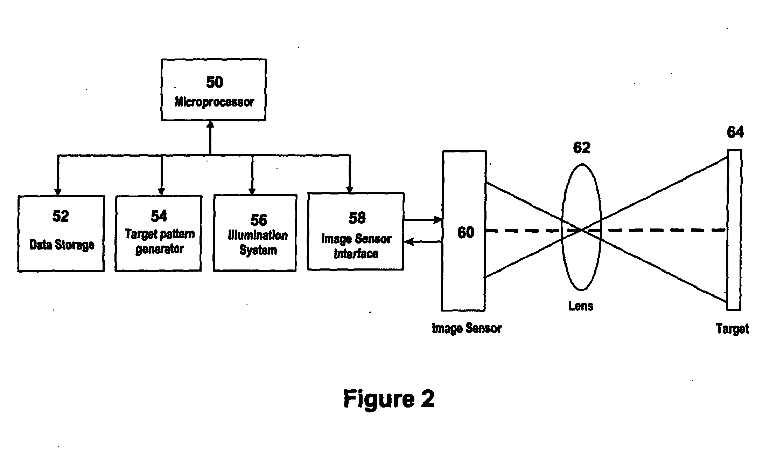

With reference to Figure 1, the image acquisition device **16** also referred to as an image reader in this specification, which may be any suitable image reader known in the art, is mounted on the temple portion of the frame of the eyeglasses **12.** The image reader **16** is illustrated schematically in the block diagram of Figure 2 and may be any suitable image reader known in the art that comprises a microprocessor **50,** a laser or LED target pattern generator **54** for providing visual feedback on aiming and range-finding, an illumination source **56** for providing incremental light directed at the target **64** in low ambient conditions, a lens **62** for focusing the reflected light, an image sensor **60** for capturing the reflected light, an image sensor interface **58** for communication between the image sensor and the microprocessor and storage **52** capability to store image data. The image reader **16** in this embodiment includes an array image sensor but could alternatively be a linear imager or RFID interrogator. In dedicated symbology reading systems, which do not require image acquisition, a laser scanner may also be used.

The microphone **14** may be a miniature microphone permanently mounted on the eyeglass **12** frame or temples, or it may be a mini-boom microphone that can be adjusted to provide more optimal voice input, mounted on either the frame or temples.

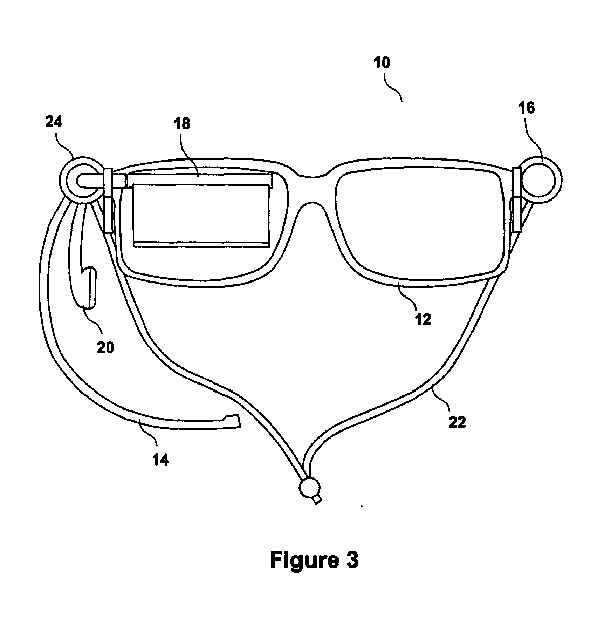

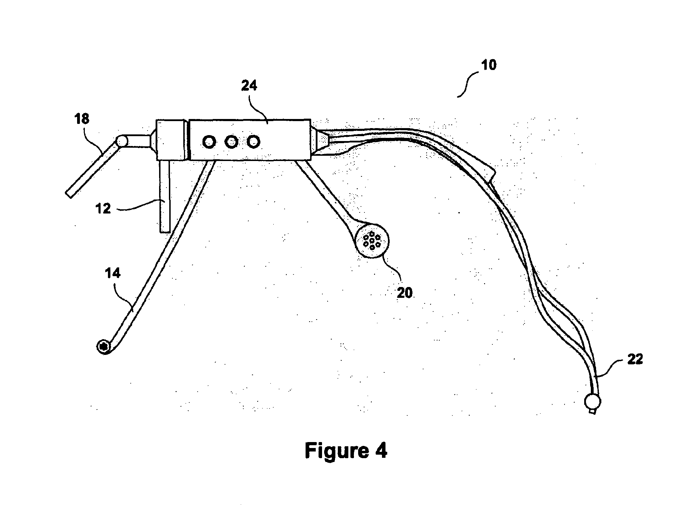

The speaker **20** for audio feedback may be in the form of an audio receiver mounted on a temple of the eyeglasses **12** or in an ear bud style headset as illustrated in Figures 3 and 4.

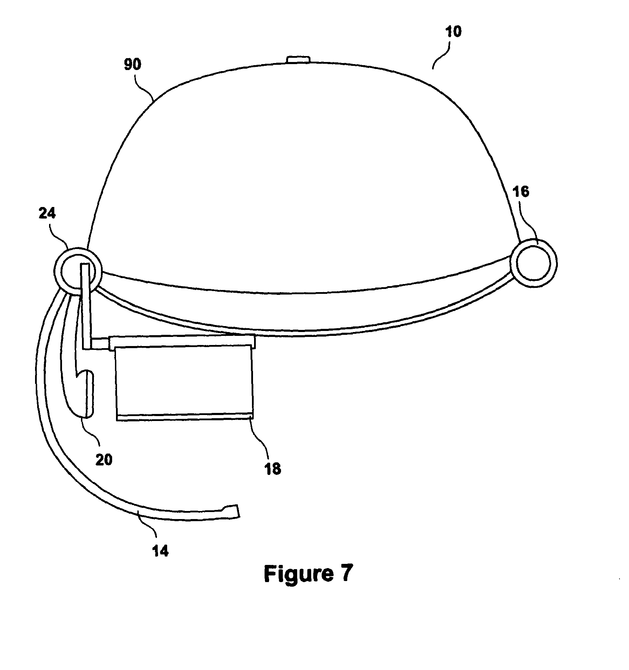

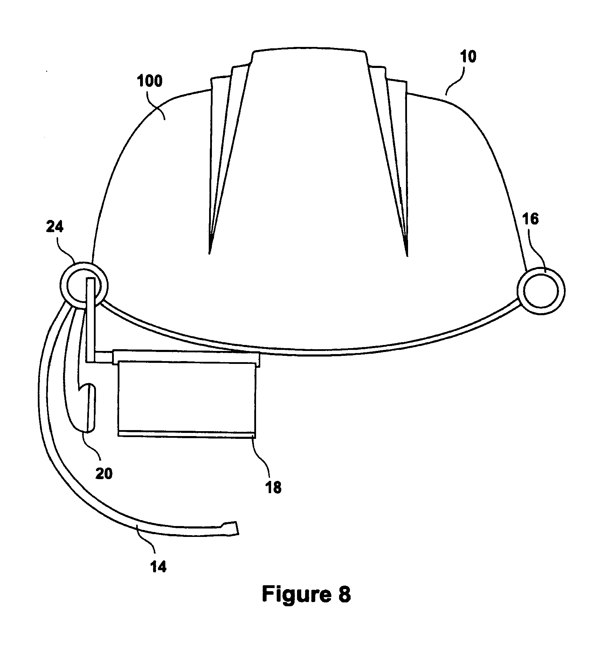

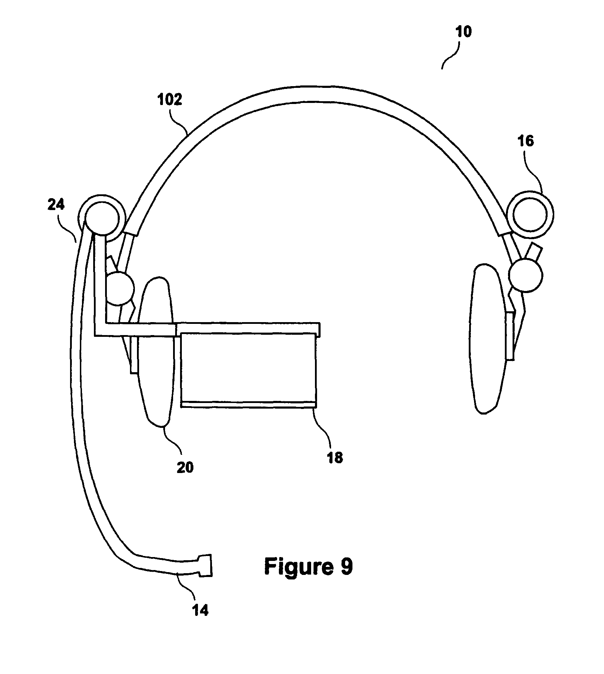

It should be noted by those skilled in the art that the eyeglasses **12** may be replaced with a hat, helmet, headphones or other headgear configurations, without departing from the scope of the invention. For example a cap or hat **90** as shown in Figure 7, may be adapted to accommodate the input devices of the data acquisition system. Figure 8 illustrates an embodiment of the present invention using a safety helmet **100,** and Figure 9 illustrates an embodiment in which a set of earphones **102** are adapted for use to support the data input devices of the data acquisition system.

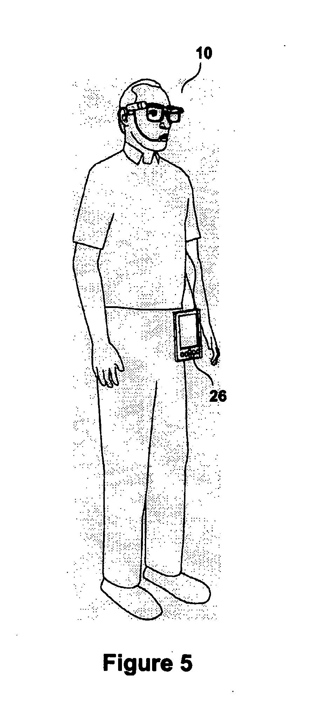

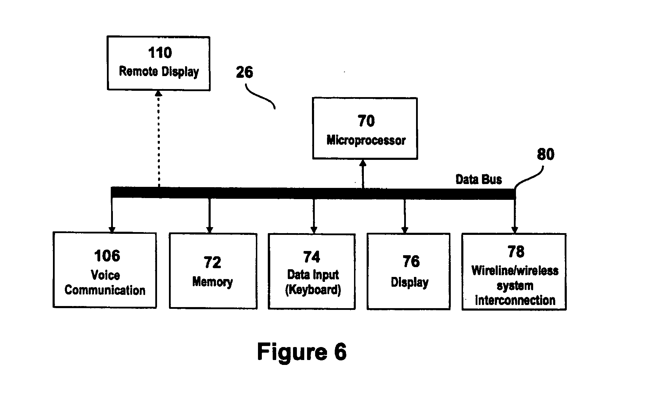

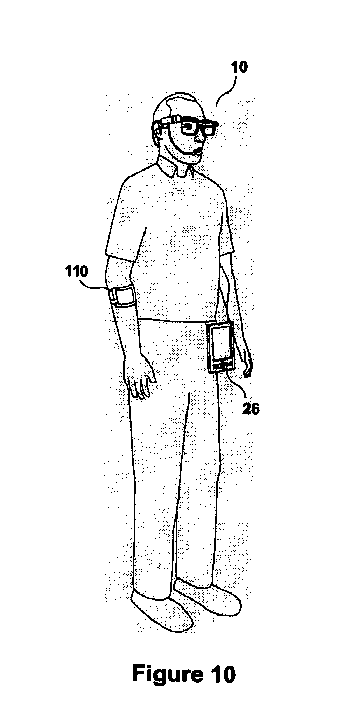

As illustrated in figures 3 and 4, the image reader **16,** microphone **14** and audio receiver **20** are connected by cables **22** to a remote portable data terminal **26** that may be worn on the belt of the operator, as shown in figure 5. The data terminal unit **26** is illustrated schematically in Figure 6 and may be any suitable data terminal or portable computer that is commonly known in the art that comprises a data bus **80,** a microprocessor **70,** memory **72,** a data input device **74** such as a keyboard or the like, a display **76,** wire line and/or wireless system interconnection **78** capabilities, voice communication capabilities **106** including the microphone **12** and speaker **20** shown in Figure 3, and drive electronics (not shown) that receive and process signals from an image source (e.g., the microprocessor **70** or the image sensor **60).** The system may also include a remote display **110** which may be mounted to a human operators forearm (as shown in Figure 10). The processed signals contain information that controls the intensity and mix of color and the coordinates to position the individual picture elements (pixels) that comprise the image. The data terminal **26** receives voice input from the microphone **14** to select or change modes, it receives images from the image reader **16** for either symbology detection and decoding or image processing including image enhancement and compression, and generates images for display on the display system.

With reference again to Figures 1, 3 and 4, a further embodiment of the present invention is disclosed having an image display system **24** mounted in the wearable unit **10** to provide a personal heads-up display. The image display system **24** consists of a scanning laser heads-up display system that overlays see-through information on a translucent screen **18** or on an operator's vision. With this image display system **24,** the human operator has the ability to see the superimposed data and still view the work environment. The image display system **24** may be any suitable image display system known in the art, comprising a light source with refractive and reflective optical elements that project the rapidly scanned beam of light as an image on a screen or on the viewer's eye. To produce an image, a horizontal and vertical scanner or a single microelectromechanical scanner (MEMS) directs the light beam that creates the image. Alternatively, an LCD screen may be used in the same manner, to provide visual information to the human operator.

The headpiece **10** of the image acquisition system of the present invention are shown to be connected by cables **22** to a remote portable data terminal **26,** such as a hand-held computer, that is worn on a belt or garment of the human operator as shown in Figure 5. The headpiece **10** of the image acquisition system may have wireless or wireline network interconnection and may have a variety of application level software capabilities.

The data terminal **26** may receive voice input from the microphone **14** to select or change modes of operation. In the case where the human operator is attempting to capture an image rather than decode information, the human operator would instruct the unit to enable the imaging mode through voice command. The portable data terminal **26** would have voice recognition capabilities in order to receive and recognize voice commands. The human operator would aim the unit as before, first receiving visual feedback as to the accuracy of aiming from the integrated laser or LED-based target pattern generator of the image reader unit **16.** The data terminal **26** may also receive commands from the human operator in more conventional ways such as through a keyboard or through a pen-based touch screen or the like.

During the image acquisition process, the data terminal unit **26** may receive raw or processed images of a target for either symbology detection and decoding or image processing. The images are generated for display on the screen of the data terminal unit **26** or on the heads-up image display system **24** described in an alternative embodiment to allow the human operator to preview the image. A preview of the image of interest may be viewed, or stored image data may be retrieved from the memory of the portable data terminal **26** for display.

Depending on the operating mode selected by the human operator, the portable data terminal unit **26** may call upon resident application software to apply a variety of recognition, processing and decoding algorithms to the acquired image. Capabilities range from simple detection and decoding of a bar code, to more complex pattern matching required by certain optical characters, to full optical character recognition. In addition, the acquired image may be processed to enhance the visual image. This may include applying algorithms to remove image distortion, to correct for perspective, to compensate for uneven illumination and/or to compress the image data as required.
Using the image acquisition capability, the device may also be capable of capturing video clips of certain events as commanded by the human operator.

In yet another embodiment of the present invention, the human operator may connect the wearable portion of the unit **10** to a wireless transceiver (not shown) that is worn on the body. In this embodiment, the actual processing of incoming or outgoing information is accomplished on a remote host such as a personal computer with the appropriate application software or on a networked application whereby the transmitted data is received and forwarded to an appropriate application server by a wireless access point.

In yet another embodiment of the present invention, shown in Figure 10, a remote display **110** worn on the arm of the human operator may be integrated into the data acquisition system as an alternative or additional to the image display of the portable data terminal **26.** The operator could see the results of an image or data acquisition on for example, a small LCD panel located on a forearm or wrist. The remote display **110** may be useful in situation where it is deemed that the wearable display of the data terminal **26** is too intrusive or adds too much mass to the wearable unit.

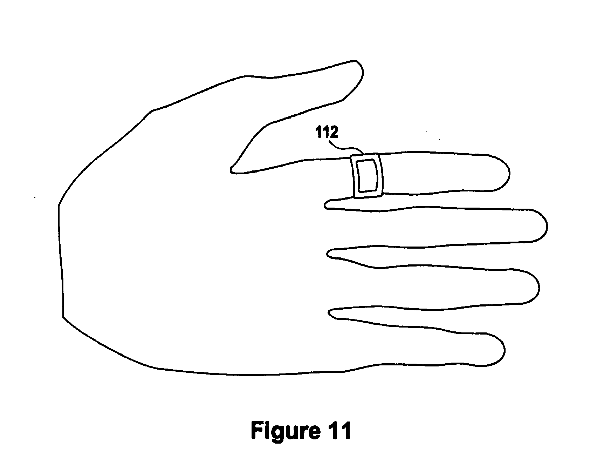

In a further embodiment of the present invention, shown in Figure 11, the actuation of the data or image acquisition can be implemented through a thumb-activated switch **112** that fits on the human operator's finger. This switch **112** uses a hand motion to activate the acquisition sequence while leaving the human operator's hands free for necessary handling activities at the point of use.

Both the head worn and arm or wrist worn segments of the wearable data acquisition system may be wireless devices that communicate though personal area network wireless communication protocols with the portable data terminal **26.** This removes the need for cables **22** between components. In this configuration, both the wearable headpiece **10** and arm portion would require rechargeable battery sources to power the acquisition and drive components.

This invention advantageously overcomes problems relating to hand operated barcode scanners or portable data terminals in high volume applications. Specifically, the present invention enables the operator to have free use of both hands during the handling of materials that require either data or image acquisition.

The invention advantageously provides the ability to separate the data input (image reader) from the portable data terminal to allow for easier updating of either capability. This is extremely important given the relatively short product lifecycles of portable data terminals. By using standard interfaces, both software and hardware, the data input devices may be mated to a wide range of portable data terminals and allows for an easy expansion of capabilities.

While the invention has been described according to what is presently considered to be the most practical and preferred embodiments, it must be understood that the invention is not limited to the disclosed embodiments. Those ordinarily skilled in the art will understand that various modifications and equivalent structures and functions may be made without departing from the spirit and scope of the invention as defined in the claims. Therefore, the invention as defined in the claims must be accorded the broadest possible interpretation so as to encompass all such modifications and equivalent structures and functions.

## Claims

1. A wearable data acquisition system comprising:
- a data terminal; and
- a headpiece apparatus adapted to be worn by an operator, wherein the headpiece apparatus comprises:
- an image acquisition device adapted to communicate with the data terminal;
- a microphone for receiving voice commands from the operator for transmission to the data terminal; and
- a speaker for receiving signals from the data terminal and transmitting audio signals to the operator.

2. The wearable data acquisition system as claimed in claim 1 wherein the data terminal is a portable terminal adapted to be located on the operator.

3. The wearable data acquisition system as claimed in claim 2 wherein the data terminal is connected to the headpiece apparatus by cables.

4. The wearable data acquisition system as claimed in claim 1 wherein the data terminal is a terminal adapted to be located remote from the operator.

5. The wearable data acquisition system as claimed in any one of claims 1, 2 or 4 wherein the headpiece apparatus and the data terminal include wireless communications means.

6. The wearable data acquisition system as claimed in any preceding claim wherein the data terminal comprises: a data bus, a microprocessor, a memory, a keyboard and a display and/or a touch screen interface.

7. The wearable data acquisition system as claimed in any preceding claim wherein the headpiece apparatus further comprises an image display system adapted to be viewed by the operator.

8. The wearable data acquisition system as claimed in claim 7 wherein the image display system comprises a scanning laser heads-up display for projecting image data into the vision field of the operator.

9. The wearable data acquisition system as claimed in any preceding claim comprising a remote display unit adapted to be worn on the operator.

10. The wearable data acquisition system as claimed in any preceding claim comprising a thumb-activated switch adapted to be worn on a finger of the operator to manually activate an acquisition sequence.

11. The wearable data acquisition system as claimed in any preceding claim wherein the headpiece apparatus includes a pair of eyeglasses.

12. The wearable data acquisition system as claimed in any one of claims 1 to 10 wherein the headpiece apparatus includes a hat.

13. The wearable data acquisition system as claimed in any one of claims 1 to 10 wherein the headpiece apparatus includes a helmet.

14. The wearable data acquisition system as claimed in any one of claims 1 to 10 wherein the headpiece apparatus includes a set of earphones.

15. The wearable data acquisition system as claimed in any preceding claim wherein said image acquisition device is a solid-state imager.

16. The wearable data acquisition system as claimed in any preceding claim wherein the image acquisition device includes a target pattern generator.

17. The wearable data acquisition system as claimed in claim 16 wherein the target pattern generator is a laser-based target pattern generator.

18. The wearable data acquisition system as claimed in claim 16 wherein the target pattern generator is an LED-based target pattern generator.

19. The wearable data acquisition system as claimed in any preceding claim wherein the image acquisition device includes a target range finder.

20. The wearable data acquisition system as claimed in claim 19 wherein the target range finder is an ultrasonic transducer.

21. The wearable data acquisition system as claimed in any preceding claim wherein the microphone is a mini-boom microphone.

22. The wearable data acquisition system as claimed in any preceding claim wherein the speaker is an ear bud style speaker.

23. A method of operating a wearable data acquisition system having an image acquisition device on a headpiece apparatus adapted to be worn by an operator comprising the steps of:
a. positioning the headpiece apparatus before a target such that the image acquisition device views the target;
b. adjusting the relative position between the headpiece apparatus and the target until the image acquisition device is in the optimal range of the target; and
c. triggering an image acquisition cycle by the data acquisition system when the image acquisition device is in the optimal range of the target.

24. A method of operating a wearable data acquisition system as claimed in claim 23 wherein step b. includes:
b.1. projecting a target pattern on the target for aiming the image acquisition device and for determining when the image acquisition device is in the optimal range of the target.

25. A method of operating a wearable data acquisition system as claimed in claim 23 wherein step b. includes:
b.1. projecting a target pattern on the target for aiming the image acquisition device; and
b.2. projecting a range-finding signal on the target for determining when the image acquisition device is in the optimal range of the target.

26. A method of operating a wearable data acquisition system as claimed in any one of claims 23 to 25 wherein the step c. comprises:
c.1. triggering the image acquisition cycle is by voice command by the operator.

27. A method of operating a wearable data acquisition system as claimed in any one of claims 23 to 25 wherein the step c. comprises:
c.1. manually triggering the image acquisition cycle is by the operator.
